# NEUE EUROPÄISCHE PATENTSCHRIFT

(11) **EP 3 168 282 B2**
(45) Veröffentlichungstag und Bekanntmachung des Hinweises auf die Entscheidung über den Einspruch: **09.10.2024**
(45) Hinweis auf die Patenterteilung: 12.12.2018
(21) Anmeldenummer: 16189027.2
(22) Anmeldetag: 15.09.2016
(51) Int. Cl.: C10C 3/00, E01C 19/10, F26B 21/14, F26B 23/00

(54) **ANLAGE UND VERFAHREN ZUM HERSTELLEN VON ASPHALT**
ASSEMBLY AND METHOD FOR MANUFACTURING ASPHALT
INSTALLATION ET PROCEDE DE FABRICATION D'ASPHALTE

(30) Priorität: 12.11.2015 DE 102015222284
(43) Veröffentlichungstag der Anmeldung: 17.05.2017
(73) Patentinhaber: Benninghoven Zweigniederlassung der Wirtgen Mineral Technologies GmbH, 54516 Wittlich (DE)
(72) Erfinder: WAGNER, Frank, 54492 Zeltingen-Rachtig (DE)
(74) Vertreter: Rau, Schneck & Hübner Patentanwälte Rechtsanwälte PartGmbB

(56) Entgegenhaltungen:
- EP-A2- 2 213 939
- EP-A2- 2 835 470
- DE-A1- 3 530 248
- US-A1- 2015 093 297

## Beschreibung

Die Erfindung betrifft eine Anlage zum Herstellen von Asphalt und ein Verfahren zum Reduzieren von Abgas- und/oder Geruchsemissionen bei der Herstellung von Asphalt.

Bei der Herstellung von Asphalt werden die Inhaltsstoffe erwärmt und miteinander vermischt. Die Herstellung von Asphalt ist offenbart in EP 2 835 470 A2 und DE 35 30 248 A1. Weitere Verfahren zur Erwärmung von Medien sind bekannt aus US 2015/0093297 A1 und EP 2 213 939 A2. Bei deren Erwärmung entstehen Abgasemissionen und/oder Geruchsemissionen, die insbesondere durch rezykliertes Altasphaltgranulat und/oder Bitumenmaterial verursacht werden können.
Der Erfindung liegt die Aufgabe zugrunde, bei der Herstellung von Asphalt Abgas- und/oder Geruchsemissionen zu reduzieren.

Die Aufgabe wird durch die Merkmale der Ansprüche 1 und 12 gelöst. Der Kern der Erfindung besteht darin, dass eine Abgasquelle mit einer Erwärmungseinheit verbunden ist. Abgase, die von der Abgasquelle verursacht werden, können über eine Abgasleitung in die Erwärmungseinheit geleitet und dort verbrannt werden. Insbesondere werden sämtliche Abgase der Anlage in die Erwärmungseinheit geführt und dort nachverbrannt. Dadurch sind die Abgas- und/oder Geruchsemissionen an die Umgebung reduziert. Schadstoffe in dem Abgas sind beispielsweise Kohlenwasserstoffe und/oder Geruchsträger. Insbesondere die Kohlenwasserstoffe werden größtenteils in der Erwärmungseinheit nachverbrannt. Die Schadstoffbelastung ist reduziert. Der Anteil der Schadstoffe in dem nachverbrannten Gas ist um mindestens 50 %, insbesondere mindestens 60 %, insbesondere mindestens 70 %, insbesondere mindestens 80 % und insbesondere um mindestens 90 % reduziert. Die Herstellung von Asphalt ist aus ökologischer Sicht verbessert. Zudem wird durch das Nachverbrennen des Abgases in der Erwärmungseinheit Wärme erzeugt, die effizient zum Trocknen eines ersten Materials in einer ersten Trocknungseinheit genutzt werden kann. Das Herstellen von Asphalt ist ökonomisch verbessert. Insbesondere ist das erste Material, das in der ersten Trocknungseinheit getrocknet wird, Weißmineral. Insbesondere ist die von der Erwärmungseinheit zugeführte Wärme ausreichend, um die Trocknung des ersten Materials zu gewährleisten. Die Erwärmungseinheit dient zum Erwärmen eines Gases, das insbesondere ein Gasgemisch ist und das Feinanteile und Feinstanteile noch aufweisen kann. Die Anlage weist mindestens eine Abgasquelle auf. Insbesondere können mehrere Abgasquellen vorgesehen sein.

Die Anlage, bei der die mindestens eine Abgasquelle mit einer Absaughaube mit einer integrierten Partikelabscheideeinheit ausgeführt ist, gewährleistet, dass der der Erwärmungseinheit zugeführte Abgasstrom im Wesentlichen Feinpartikel enthält mit einer Partikelgröße, die insbesondere kleiner ist als 100 µm, insbesondere kleiner als 63 µm und insbesondere kleiner als 20 µm. Größere Partikel können mit der Absaughaube effektiv und unmittelbar abgeschieden werden.

Eine Erwärmungseinheit gemäß Anspruch 2 ermöglicht eine effektive Gaserwärmung. In einem Heißgaserzeuger kann mittels einer Wärmequelle, insbesondere einem Heißgas-Brenner, zugeführtes Gas unmittelbar erwärmt werden. Dadurch, dass das zugeführte Gas Abgas ist, werden darin enthaltene Schadstoffe und/oder Geruchsträger unmittelbar nachverbrannt. Die Nachverbrennung in dem Heißgaserzeuger ist vereinfacht.

Eine erste Trocknungseinheit gemäß Anspruch 3 kann vereinfacht ausgeführt sein. Ein Drehrohrofen kann mit dem erwärmten Gas aus der Erwärmungseinheit versorgt werden, wobei eine eigene, separate Wärmequelle für die erste Trocknungseinheit entfallen kann. In diesem Fall sind Feuerschutzeinbauten in dem Drehrohrofen entbehrlich. In dem Drehrohrofen können Wurfbleche für die bessere Wärmeübertragung des ersten Materials vorgesehen sein.

Eine erste Trocknungseinheit gemäß Anspruch 4 ermöglicht eine verbesserte Einsatzflexibilität. Dadurch, dass ein erster Trocknungs-Brenner vorgesehen ist, ist ein zuverlässiger Betrieb der Anlage gewährleistet. Für den Fall, dass die von der Erwärmungseinheit zur Verfügung gestellte Wärme für die Trocknung des ersten Materials nicht ausreichend sein sollte, kann der erste Trocknungs-Brenner aktiviert werden.

Eine Filteranlage gemäß Anspruch 5 ermöglicht eine zusätzliche Reduzierung der Schadstoffe im Abgasstrom, der die Anlage verlässt. Insbesondere können Feinpartikel separat abgeschieden werden.

Eine Anlage gemäß Anspruch 6 ermöglicht die unmittelbare Ausfilterung von Rest-Feinpartikeln.

Eine Anlage gemäß Anspruch 7 ermöglicht eine besonders effektive Reduktion der Schadstoffemissionen. Die mindestens eine Abgasquelle ist eine Aufbereitungseinheit für ein zweites Material. Das zweite Material ist insbesondere Altasphaltgranulat, das typischerweise Zuschlagstoffe enthält, wobei a priori nicht alle Zuschlagstoffe bekannt sind. Unbekannte Zuschlagstoffe und/oder weitere bekannte Zuschlagstoffe, die infolge einer möglichen Erwärmung des Altasphaltgranulats entstehen, sowie Geruchs- und Schadstoffemissionen, werden der Erwärmungseinheit zugeführt und dort nachverbrannt. Es ist auch möglich, dass Altasphaltgranulat kalt, also ohne vorherige Erwärmung, verwendet wird. Die dabei entstehenden Dämpfe und Schadstoffe können ebenfalls in der Erwärmungseinheit nachverbrannt werden.

Eine Anlage gemäß Anspruch 8 ermöglicht die Integration weiterer, verschiedenartiger Abgasquellen. Insbesondere ist es möglich, dass die Anlage eine Vielzahl verschiedener Abgasquellen aufweist, die beispielsweise über ein, insbesondere verzweigtes, Abgasleitungsnetz mit der Erwärmungseinheit verbunden sind. Es ist insbesondere möglich, die Abgase sämtlicher Abgasquellen der Anlage der Erwärmungseinheit zuzuführen und dort zu verbrennen.

Eine Gasfördereinheit gemäß Anspruch 9 ermöglicht eine gezielte Luftstromerzeugung entlang der Abgasleitung.

Ein Schließelement gemäß Anspruch 10 ermöglicht ein schaltbares Aktivieren und Deaktivieren von Leitungsabschnitten von Leitungsabschnitten der Abgasleitung. Dadurch ermöglicht das Schließelement, das insbesondere als Schnellschlussklappe ausgeführt ist, eine Sicherheitsfunktion. Bei einem eventuellen Brand kann das Schließelement die Abgasleitung unmittelbar verschließen und damit verhindern, dass sich ein Brand auf weitere Anlagenbestandteile ausbreitet. Es ist zudem möglich, mittels des Schließelements nur die Anlagenbestandteile an die Erwärmungseinheit anzuschließen, die Abgase an die Erwärmungseinheit abgeben sollen. Nicht benötigte Anlagenbestandteile können durch das Schließelement entlang der Abgasleitung unmittelbar abgetrennt, also abgastechnisch deaktiviert werden.

Eine Anlage mit einer Steuereinheit gemäß Anspruch 11 ermöglicht die unmittelbare Beeinflussung der Förderleistung der Gasfördereinheit. Insbesondere ist die Gasfördereinheit als Absaugventilator ausgeführt, wobei die Drehzahl des Absaugventilators über die Steuereinheit geregelt werden kann. Je größer die Drehzahl des Absaugventilators, desto größer ist der geförderte Luftvolumenstrom.

Das erfindungsgemäße Verfahren gemäß Anspruch 12 ermöglicht im Wesentlichen die Vorteile, die die erfindungsgemäße Anlage ermöglicht, worauf hiermit verwiesen wird.

Weitere vorteilhafte Ausgestaltungen, zusätzliche Merkmale und Einzelheiten der Erfindung ergeben sich aus der nachfolgenden Beschreibung eines Ausführungsbeispiels. Es zeigen:

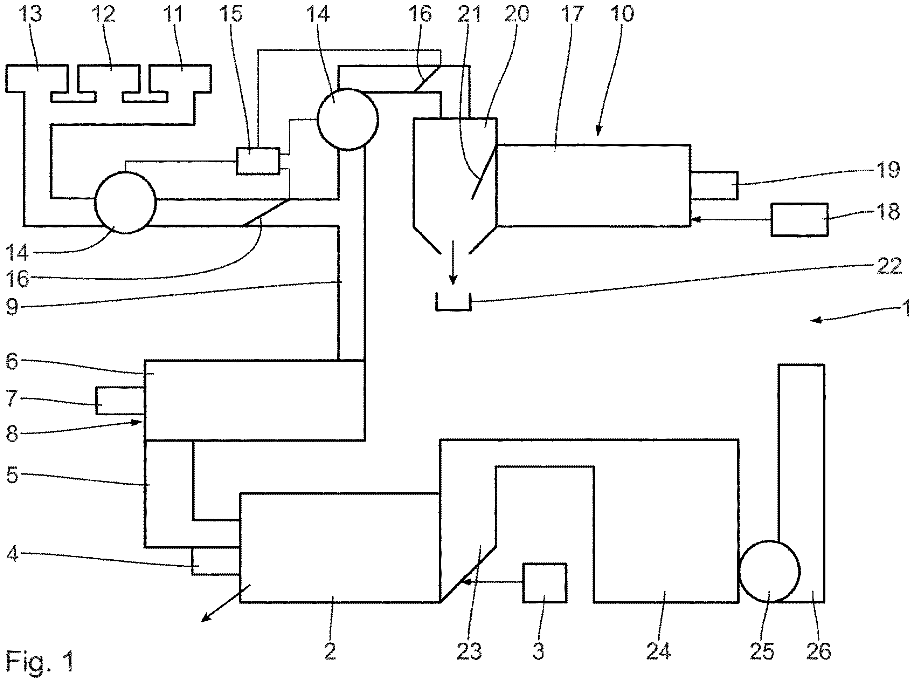

- Fig. 1: eine schematische Darstellung einer Anlage zur Herstellung von Asphalt gemäß der Erfindung.

Eine in Fig. 1 dargestellte Anlage 1 dient zur Herstellung von Asphalt. Die Anlage 1 umfasst eine erste Trocknungseinheit 2, in der Weißmineral als erstes Material getrocknet wird. Die erste Trocknungseinheit 2 ist als Drehrohrofen ausgeführt. Die erste Trocknungseinheit 2 wird im Gegenstromverfahren betrieben. Weißmineral wird aus einer Weißmineralquelle 3 der ersten Trocknungseinheit 2 stirnseitig zugeführt und an der gegenüberliegenden Stirnseite wieder abgeführt. Das erwärmte Weißmineral wird anschließend einer Weiterverarbeitung zugeführt, insbesondere mit weiteren Bestandteilen vermischt. An der Stirnseite, an der das erwärmte Weißmineral die erste Trocknungseinheit 2 verlässt, ist ein erster Trocknungs-Brenner 4 angeordnet. Der erste Trocknungs-Brenner 4 dient zum unmittelbaren Erwärmen des ersten Materials in der ersten Trocknungseinheit 2. Der erste Trocknungs-Brenner 4 kann auch entfallen.

An der Stirnseite des Materialaustrags ist an der ersten Trocknungseinheit 2 über eine Heißgasleitung 5 ein Heißgaserzeuger 6 angeschlossen. An den Heißgaserzeuger 6 ist stirnseitig eine Wärmequelle 7 in Form eines Heißgas-Brenners angeschlossen. Der Heißgaserzeuger 6 ist insbesondere ebenerdig angeordnet. Der Heißgaserzeuger 6 ist zusammen mit der Wärmequelle 7 unmittelbar auf dem Boden angeordnet. Eine derartige Anordnung ist unkompliziert und insbesondere aus statischen Gründen vorteilhaft. Der Heißgaserzeuger 6 wird im Gegen-/Kreuzstrom-Verfahren betrieben. Der Heißgaserzeuger 6 und die Wärmequelle 7 bilden eine Erwärmungseinheit 8, die zum Erwärmen eines Gases dient. Das Gas ist insbesondere ein Gasgemisch. Das zu erwärmende Gas wird der Erwärmungseinheit 8, insbesondere dem Heißgaserzeuger 6, über eine Abgasleitung 9 zugeführt. Ein derartiger Heißgaserzeuger 6 mit Wärmequelle 7 ist bezüglich seines Aufbaus und seiner Funktion, d.h. seiner Betriebsweise, in der DE 10 2015 217 845.5 beschrieben, worauf hiermit ausdrücklich verwiesen wird.

Über die Abgasleitung 9 sind mit der Erwärmungseinheit 8 eine erste Abgasquelle in Form einer Aufbereitungseinheit 10 für Altasphaltgranulat als zweites Material, ein Verladesilo 11, eine Mischeinheit 12 und eine Bitumeneinheit 13 angeschlossen. Es können auch mehr oder weniger als die genannten Abgasquellen vorgesehen sein.

Entlang der Abgasleitung 9, die als verzweigtes Abgasleitungsnetz ausgeführt ist, sind zwei Gasfördereinheiten 14 vorgesehen, die zum Erzeugen eines Luftstroms dienen, um Abgase aus den Abgasquellen 10 bis 14 zu der Erwärmungseinheit 8 zu fördern. Gemäß dem gezeigten Ausführungsbeispiel ist eine Gasfördereinheit 14 den Abgasquellen Verladesilo 11, Mischeinheit 12 und Bitumeneinheit 13 zugeordnet. Die andere Gasfördereinheit 14 ist der Aufbereitungseinheit 10 zugeordnet. Es ist auch denkbar, dass jeder Abgasquelle eine separate Gasfördereinheit zugeordnet ist. Die Gasfördereinheiten 14 sind insbesondere jeweils als Absaugventilator ausgeführt. Der Absaugventilator ist entlang der Abgasleitung 9 zwischen der jeweiligen Abgasquelle 10 bzw. 11, 12, 13 und der Erwärmungseinheit 8 angeordnet. Die Absaugventilatoren sind in die Abgasleitung 9 integriert. Die Gasfördereinheiten 14 sind mit einer Steuerungseinheit 15 in Signalverbindung.

Entlang der Abgasleitung 9 sind Schließelemente 16 angeordnet. Gemäß dem gezeigten Ausführungsbeispiel sind die Schließelemente 16 jeweils als Schnellschlussklappen ausgeführt. Die Schnellschlusskappen dienen zum schaltbaren Schließen der Abgasleitung 9, insbesondere eines jeweiligen Leitungsabschnitts der Abgasleitung 9. Zum schaltbaren Schließen sind die Schließelemente 16 jeweils in Signalverbindung mit der Steuerungseinheit 15. In einem geschlossenen Schaltzustand riegelt das Schließelement 16 den Leitungsquerschnitt der Abgasleitung ab. Ein Gasstrom bei geschlossenem Schließelement ist verhindert.

Die Aufbereitungseinheit 10 weist gemäß dem gezeigten Ausführungsbeispiel eine Altasphalttrockentrommel 17 auf, die im Gleichstromverfahren betrieben wird. Altasphaltmaterial wird aus einer Altasphaltquelle 18 stirnseitig der Altasphalttrockentrommel 17 zugeführt. Die Altasphalttrockentrommel ist eine zweite Trocknungseinheit. An der zweiten Trocknungseinheit ist ein zweiter Trocknungs-Brenner 19 angeordnet. Der zweite Trocknungs-Brenner 19 ist an der Stirnseite des Materialzulaufs angeordnet. An der gegenüberliegenden Stirnseite, an der der Materialauslauf des Altasphaltmaterials vorgesehen ist, ist eine Absaughaube 20 vorgesehen. Die Absaughaube 20 dient zum Absaugen von partikelhaltigem Gas aus der Altasphalttrockentrommel 17. Die Absaughaube 20 weist eine integrierte Partikelabscheideeinheit auf, die passiv als Strömungsbeeinflussungseinheit ausgeführt ist und insbesondere ein Strömungsleitelement 21 in Form einer schwenkbaren Klappe, die auch als Pendelklappe bezeichnet wird, aufweist. Der Aufbau und die Betriebsweise der Absaughaube 20 sind in der deutschen Patentanmeldung DE 10 2015 217 845.5 beschrieben, worauf hiermit ausdrücklich verwiesen wird.

In der Absaughaube 20 abgeschiedene Partikel werden in einem unteren Bereich in einem Sammelbehälter 22 gesammelt. Der Sammelbehälter 22 kann auch zur Aufnahme von getrocknetem Altasphaltgranulat aus der Altasphalttrockentrommel 17 dienen. Das bedeutet, dass der Materialauslauf aus der Altasphalttrockentrommel 17 in dem Sammelbehälter 22 münden kann. Zusätzlich oder anstelle des Sammelbehälters 22 kann das jeweilige Material auch einer weiteren Verarbeitung über eine Wiegeeinrichtung unmittelbar zugeführt werden, insbesondere einer Mischeinheit.

Die Absaughaube 20 ist über die Abgasleitung 9 mit dem Heißgaserzeuger 6 unmittelbar verbunden.

An der Stirnseite des Materialzulaufs der ersten Trocknungseinheit 2 ist eine Abluftleitung 23 angeschlossen. Über die Abluftleitung 23 wird Abluft aus der ersten Trocknungseinheit 2 in eine Filteranlage 24 gefördert. Die Filteranlage 24 dient zum Abscheiden von Feinpartikeln. Die abgeschiedene Abluft kann über einen Exhaustor 25 und einen Kamin 26 an die Umgebungsluft abgegeben werden.

Nachfolgend wird ein Verfahren zur Herstellung von Asphalt näher erläutert. In der Aufbereitungseinheit 10 wird Altasphaltgranulat erwärmt. Die Altasphalttrockentrommel 17 wird im Gleichstromverfahren betrieben. Abgas aus der Altasphalttrockentrommel 17 wird in der Abscheideeinheit 20 gereinigt, indem insbesondere Feinpartikel abgeschieden werden. Das so gereinigte Abgas wird über die Abgasleitung 9 mittels der Gasfördereinheit 14 in den Heißgaserzeuger 6 gefördert. In dem Heißgaserzeuger 6 werden Schadstoffanteile und/oder Geruchsträger des Abgases nachverbrannt. Durch die Nachverbrennung wird das Abgas gereinigt, indem noch enthaltene Schadstoffpartikel und Geruchsträger reduziert werden. Durch die Nachverbrennung entsteht zusätzliche Wärme. Das erwärmte Gas aus dem Heißgaserzeuger 6 wird über die Heißgasleitung 5 der ersten Trocknungseinheit 2 zugeführt. Die erste Trocknungseinheit 2 wird im Gegenstromverfahren betrieben. In der ersten Trocknungseinheit 2 wird Weißmineral getrocknet. Die Abluft aus der ersten Trocknungseinheit 2 wird über die Abluftleitung 23 in die Filteranlage 24 gefördert und dort über den Exhaustor 25 und den Kamin 26 an die Umgebung abgegeben.

Es ist auch denkbar, dass Altasphaltgranulat ohne Vorwärmung bei der Herstellung von Asphalt verwendet werden soll. In diesem Fall kann die Aufbereitungseinheit 10 von dem Heißgaserzeuger über das Schließelement 16 strömungstechnisch getrennt werden. Dadurch, dass das der Aufbereitungseinheit 10 zugeordnete Schließelement 16 geschlossen wird, ist ein Gasstrom entlang der Abgasleitung 9 von dem Heißgaserzeuger 6 zu der Aufbereitungseinheit 10 verhindert. Zusätzlich oder alternativ kann das andere Schließelement 16 geöffnet werden, um die weiteren Abgasquellen, insbesondere das Verladesilo 11, die Mischeinheit 12 und/oder die Bitumeneinheit 13, strömungstechnisch über die Abgasleitung 9 mit dem Heißgaserzeuger 6 zu verbinden.

Die Anlage 1 kann grundsätzlich in drei verschiedenen Betriebsweisen betrieben werden. In einer ersten Betriebsweise ist ausschließlich die Aufbereitungseinheit 10 mit der Altasphalttrockentrommel 17 mit dem Heißgaserzeuger 6 verbunden. In einer zweiten Betriebsweise werden zusätzlich zu den Abgasen aus der Altasphalttrockentrommel 17 der Aufbereitungseinheit 10 auch kontaminierte Luftströme der weiteren Abgasquellen 11, 12 und/oder 13 dem Heißgaserzeuger 6 zugeführt. Eine dritte Betriebsweise besteht darin, dass ausschließlich kontaminierte Luft der Abgasquellen 11, 12 und/oder 13 dem Heißgaserzeuger 6 zugeführt werden, wobei schadstoffbelastete Abgase aus der Altasphalttrockentrommel 17 zurückgehalten werden.

Ein wesentlicher Vorteil der Anlage 1 besteht darin, dass bereits bestehende Anlagen zur Herstellung von Asphalt mit geringem apparativem Aufwand zu einer erfindungsgemäßen Anlage 1 umgerüstet werden können. Insbesondere können bislang bekannte Altasphalttrockentrommeln, die im Gleichstromverfahren betrieben werden, im Wesentlichen unverändert weiter betrieben werden. Abgase aus der Altasphalttrockentrommel 17 werden mittels einer Gasfördereinheit 14 in den Heißgaserzeuger 6 gefördert. In dem Heißgaserzeuger 6 werden sämtliche Abgase der Anlage verbrannt und die erwärmte Luft bzw. das erwärmte Gasgemisch zur Trocknung des Weißminerals in der ersten Trocknungseinheit 2 verwendet.

## Patentansprüche

1. Anlage zum Herstellen von Asphalt umfassend
a. eine Erwärmungseinheit (8) zum Erwärmen eines Gases,
b. eine mit der Erwärmungseinheit (8) über eine Gasleitung (5) verbundene erste Trocknungseinheit (2) zum Trocknen eines ersten Materials,
c. zusätzlich zu der ersten Trocknungseinheit (2) mindestens eine Abgasquelle (10, 11, 12, 13), die über eine Abgasleitung (9) mit der Erwärmungseinheit (8) verbunden ist,
wobei die mindestens eine Abgasquelle (10) eine Absaughaube (20) mit integrierter Partikelabscheideeinheit aufweist.

2. Anlage gemäß Anspruch 1, **dadurch gekennzeichnet, dass** die Erwärmungseinheit (8) einen Heißgaserzeuger (6) und eine Wärmequelle (6), insbesondere einen Heißgas-Brenner, aufweist.

3. Anlage gemäß einem der vorstehenden Ansprüche, **dadurch gekennzeichnet, dass** die erste Trocknungseinheit (2) als Drehrohrofen ausgeführt ist, der insbesondere mehrere Wurfbleche aufweist.

4. Anlage gemäß einem der vorstehenden Ansprüche, **dadurch gekennzeichnet, dass** die erste Trocknungseinheit (2) einen ersten Trocknungs-Brenner (4) aufweist.

5. Anlage gemäß einem der vorstehenden Ansprüche, **gekennzeichnet durch** eine Filteranlage (24) zum Abscheiden von Feinpartikeln, wobei die Filteranlage (24) insbesondere einen Exhaustor (25) und insbesondere einen Kamin (26) aufweist.

6. Anlage gemäß Anspruch 5, **dadurch gekennzeichnet, dass** die Filteranlage (24) an die erste Trocknungseinheit (2) angeschlossen ist.

7. Anlage gemäß einem der vorstehenden Ansprüche, **dadurch gekennzeichnet, dass** die mindestens eine Abgasquelle (10) als Aufbereitungseinheit für ein zweites Material ausgeführt ist.

8. Anlage gemäß einem der vorstehenden Ansprüche, **dadurch gekennzeichnet, dass** die mindestens eine Abgasquelle ein Verladesilo (11), eine Mischeinheit (12) und/oder eine Bitumeneinheit (13) ist.

9. Anlage gemäß einem der vorstehenden Ansprüche, **gekennzeichnet durch** eine Gasfördereinheit (14) zum Erzeugen eines Gasstroms von der mindestens einen Abgasquelle (10, 11, 12, 13) zu der Erwärmungseinheit (8), wobei die Gasfördereinheit (14) insbesondere als Absaugventilator ausgeführt ist und wobei der Absaugventilator insbesondere entlang der Abgasleitung (9) zwischen der mindestens einen Abgasquelle (10, 11, 12, 13) und der Erwärmungseinheit (8) angeordnet ist.

10. Anlage gemäß Anspruch 9, **gekennzeichnet durch** ein der eine Gasfördereinheit (14) zugeordnetes Schließelement (16) zum schaltbaren Schließen der Abgasleitung (9).

11. Anlage gemäß Anspruch 9 oder 10, **gekennzeichnet durch** eine Steuerungseinheit (15) zum Steuern des Gasstroms entlang der Abgasleitung (9), wobei die Steuerungseinheit (15) mit der Gasfördereinheit (14) und/oder mit dem Schließelement (16) unmittelbar in Signalverbindung steht.

12. Verfahren zur Reduktion von Abgas- und/oder Geruchsemissionen bei der Herstellung von Asphalt umfassend
- Zuführen von Abgas mindestens einer Abgasquelle (10, 11, 12, 13) über eine Abgasleitung (9) in eine Erwärmungseinheit (8), wobei Partikel mit einer Partikelgröße von mindestens 100 µm in dem Abgasstrom der mindestens einen Abgasquelle (10) mittels einer integrierten Partikelabscheideeinheit einer Absaughaube (20) abgeschieden werden, bevor der Abgasstrom der Erwärmungseinheit (8) zugeführt wird,
- Verbrennen von Schadstoffanteilen und/oder Geruchsträgern im Abgas in der Erwärmungseinheit (8),
- Erwärmen von Gas in der Erwärmungseinheit (8),
- Zuführen des erwärmten Gases über eine Gasleitung (5) in eine erste Trocknungseinheit (2), wobei die erste Trocknungseinheit (2) zusätzlich zu der mindestens einen Abgasquelle angeordnet ist,
- Trocknen eines ersten Materials in der ersten Trocknungseinheit (2).

## Claims

1. Installation for the production of asphalt, the installation comprising
a. a heating unit (8) for heating a gas,
b. a first drying unit (2) for drying a first material, the drying unit (2) being connected to the heating unit (8) via a gas line (5),
c. in addition to the first drying unit (2), at least one exhaust gas source (10, 11, 12, 13), which is connected to the heating unit (8) via an exhaust gas line (9),
wherein the at least one exhaust gas source (10) has an extraction hood (20) comprising an integrated particle separator unit.

2. Installation as claimed in claim 1, **characterized in that** the heating unit (8) has a hot gas generator (6) and a heat source (6), in particular a hot gas burner.

3. Installation as claimed in any one of the preceding claims, **characterized in that** the first drying unit (2) is configured as a rotary kiln, which in particular comprises a plurality of lifter plates.

4. Installation as claimed in any one of the preceding claims, **characterized in that** the first drying unit (2) has a first drying burner (4).

5. Installation as claimed in any one of the preceding claims, **characterized by** a filter unit (24) for separating fine particles, the filter unit (24) in particular having an exhauster (25) and in particular a chimney (26).

6. Installation as claimed in claim 5, **characterized in that** the filter unit (24) is connected to the first drying unit (2).

7. Installation as claimed in any one of the preceding claims, **characterized in that** the at least one exhaust gas source (10) is configured as a processing unit for a second material.

8. Installation as claimed in any one of the preceding claims, **characterized in that** the at least one exhaust gas source is a loading silo (11), a mixing unit (12) and/or a bitumen unit (13).

9. Installation as claimed in any one of the preceding claims, **characterized by** a gas delivery unit (14) for generating a gas stream from the at least one exhaust gas source (10, 11, 12, 13) to the heating unit (8), wherein the gas delivery unit (14) is in particular configured as an extraction fan, and wherein the extraction fan is in particular arranged along the exhaust gas line (9) between the at least one exhaust gas source (10, 11, 12, 13) and the heating unit (8).

10. Installation as claimed in claim 9, **characterized by** a closing member (16) associated to the gas delivery unit (14) for closing the exhaust gas line (9) in an actuable manner.

11. Installation as claimed in claim 9 or 10, **characterized by** a control unit (15) for controlling the gas stream along the exhaust gas line (9), wherein the control unit (15) is in direct signal communication with the gas delivery unit (14) and/or with the closing member (16).

12. Method for the reduction of exhaust gas and/or odour emissions during the production of asphalt, the method comprising
- feeding exhaust gas of at least one exhaust gas source (10, 11, 12, 13) into a heating unit (8) via an exhaust gas line (9), wherein particles with a particle size of at least 100 µm in the exhaust gas stream of the at least one exhaust gas source are separated by means of an integrated particle separator unit of an extraction hood (20) before the exhaust gas stream is being fed to the heating unit (8),
- burning pollutants and/or odoriphores in the exhaust gas in the heating unit (8),
- heating gas in the heating unit (8),
- feeding the heated gas to a first drying unit (2) via a gas line (5), wherein the first drying unit (2) is arranged in addition to the at least one exhaust gas source,
- drying a first material in the first drying unit (2).

## Revendications

1. Installation destinée à la production d'asphalte, comprenant
a. une unité de chauffage (8) destinée à chauffer un gaz,
b. une première unité de séchage (2) raccordée à l'unité de chauffage (8) par le biais d'une conduite de gaz (5) et destinée à sécher une première matière,
c. en plus de la première unité de séchage (2) au moins une source d'émanations gazeuses (10, 11, 12, 13) qui est raccordée à l'unité de chauffage (8) par le biais d'une conduite d'émanations gazeuses (9),
dans laquelle l'au moins une source d'émanations gazeuses (10) comporte une hotte d'aspiration (20) pourvue d'une unité d'extraction de particules intégrée.

2. Installation selon la revendication 1, **caractérisée en ce que** l'unité de chauffage (8) comporte un générateur de gaz chauds (6) et une source de chaleur (6), en particulier un brûleur à gaz chauds.

3. Installation selon l'une des revendications précédentes, **caractérisée en ce que** la première unité de séchage (2) est réalisée sous la forme d'un four tubulaire rotatif qui comporte en particulier plusieurs tôles de projection.

4. Installation selon l'une des revendications précédentes, **caractérisée en ce que** la première unité de séchage (2) comporte un premier brûleur de séchage (4).

5. Installation selon l'une des revendications précédentes, **caractérisée par** une installation de filtration (24) destinée à l'extraction de particules fines, l'installation de filtration (24) comportant en particulier un exhausteur (25) et en particulier une cheminée (26).

6. Installation selon la revendication 5, **caractérisée en ce que** l'installation de filtration (24) est raccordée à la première unité de séchage (2).

7. Installation selon l'une des revendications précédentes, **caractérisée en ce que** l'au moins source d'émanations gazeuses (10) est réalisée sous la forme d'une unité de traitement d'une deuxième matière.

8. Installation selon l'une des revendications précédentes, **caractérisée en ce que** l'au moins une source d'émanations gazeuses est un silo de chargement (11), une unité de mélange (12) et/ou une unité de bitume (13).

9. Installation selon l'une des revendications précédentes, **caractérisée par** une unité de transport de gaz (14) destinée à générer un flux de gaz allant de l'au moins une source d'émanations gazeuses (10, 11, 12, 13) à l'unité de chauffage (8), l'unité de transport de gaz (14) étant réalisée en particulier sous la forme d'un ventilateur d'aspiration et le ventilateur d'aspiration étant en particulier disposé le long de la conduite d'émanations gazeuses (9) entre l'au moins une source d'émanations gazeuses (10, 11, 12, 13) et l'unité de chauffage (8).

10. Installation selon la revendication 9, **caractérisée par** un élément de fermeture (16) associé à l'unité de transport de gaz (14) et destiné fermer de manière commutable la conduite d'émanations gazeuses (9).

11. Installation selon la revendication 9 ou 10, **caractérisée par** une unité de commande (15) destinée à commander le flux de gaz le long de la conduite d'émanations gazeuses (9), l'unité de commande (15) étant en liaison de signal directe avec l'unité de transport de gaz (14) et/ou avec l'élément de fermeture (16).

12. Procédé de réduction d'émanations gazeuses et/ou d'odeurs lors de la production d'asphalte, comprenant les opérations suivantes
- acheminer les émanations gazeuses d'au moins une source d'émanations gazeuses (10, 11, 12, 13) par le biais d'une conduite d'émanations gazeuses (9) à une unité de chauffage (8), des particules d'une taille de particules d'au moins 100 µm dans le flux d'émanations gazeuses de l'au moins une source d'émanations gazeuses (10) étant extraites au moyen d'une unité d'extraction de particules intégrée d'une hotte d'aspiration (20) avant que le flux d'émanations gazeuses ne soit acheminé à l'unité de chauffage (8),
- brûler des fractions de substances nocives et/ou des substances odorifères des émanations gazeuses dans l'unité de chauffage (8),
- chauffer le gaz dans l'unité de chauffage (8),
- acheminer le gaz chauffé à une première unité de séchage (2) par le biais d'une conduite de gaz (5), dans lequel la première unité de séchage (2) est disposée en plus de l'au moins une source d'émanations gazeuses,
- sécher la première matière dans la première unité de séchage (2).
